# EUROPEAN PATENT SPECIFICATION

(11) **EP 0 449 613 B1**
(45) Date of publication and mention of the grant of the patent: **06.09.1995**
(21) Application number: 91302696.9
(22) Date of filing: 27.03.1991
(51) Int. Cl.: C08F 299/08, C08F 299/04, C09D 155/00

(54) **Graft copolymers for use as the main components of coating compositions**
Pfropfcopolymere zur Verwendung als Hauptkomponente von der Beschichtungszusammensetzung
Copolymères greffés à employer en tant que composés principaux de compositions de revêtement

(30) Priority: 28.03.1990 JP 82036/90
(43) Date of publication of application: 02.10.1991
(73) Proprietor: Shin-Etsu Chemical Co., Ltd., Chiyoda-ku Tokyo 100 (JP)
(72) Inventor: Ono, Ichiro, Annaka-shi, Gunma-ken (JP); Yoshioka, Hiroshi, Shinagawa-ku, Tokyo (JP)
(74) Representative: Dixon, Donald Cossar

(56) References cited:
- EP-A- 0 108 373
- EP-A- 0 243 802
- DE-A- 3 303 784
- WPIL, FILE SUPPLIER, AN=83-797477 [43], Derwent Publications Ltd, London, GB; & JP-A-58 154 766

## Description

This invention relates to graft copolymers containing both organopolysiloxane and polylactone as branch components, a method for the production thereof, and coating compositions containing the graft copolymers as a main component.

Organopolysiloxane has previously been used as an additive or modifier to impart various useful properties to paint and varnish. Moreover, there has been extensive interest in the proportion of silicone type graft copolymers ultilizing the recent advancement in macromonomer techniques. These copolymers have excited much interest as coating materials having excellent weather resistance, water repellency, stain resistance, mold releasability, lubricity, and so on [as disclosed in Japanese Kokai Nos. 154766/58, 20360/59, 126478/59, 151272/61 and 156172/62 (The term "Japanese Kokai" means an unexamined published Japanese Patent application)].

However, all of those graft copolymers are prepared from an organopolysiloxane containing radical polymerizable group and radical polymerizable monomer(s). More specifically, their major component is a graft copolymer which contains organopolysiloxane as the branch component and an acrylic polymer as the trunk component.

Consequently, when the trunk polymer has a high glass transition point, the coat obtained is on the one hand hard and excellent in thermal resistance, but on the other hand fragile and devoid of flexibility. When the trunk copolymer is chosen so as to have a low glass transition point with the intention of heightening the flexibility, the coat formed becomes tacky and soft. In other words, conventional silicone type graft copolymers have the defect that they cannot provide a satisfactory coat.

It has now been found that a coating composition whose major component is a graft copolymer containing both organopolysiloxane and polylactone as branch components has not only excellent weather resistance, water repellency, stain resistance, mold releasability and lubricity but also has flexibility and impact resistance, so it is well suited for such applications as a weather resisting coating material for use in construction, a coating material for preventing the adherence of water and snow, a coating material for protection against fly-posting paper and graffiti, a coating material for protection from sea water stains, a water-proof coating material for concrete, a coating agent for backing ink ribbon used in heat-sensitive transfer recording or a coating agent for backing magnetic tapes.

An aim of this invention is to provide a novel resin which can form a coat having not only thermal resistance but also hardness and flexibility.

According to the present invention there is provided a graft copolymer which contains a vinyl polymer as its trunk polymer component, and both organopolysiloxane and polylactone as its branch polymer contents, wherein the proportion of the organopolysiloxane is from 5 to 80 wt% and the proportion of the polylactone is from 2 to 50 wt%.

When the graft copolymer of this invention is formulated into a coating composition having the graft copolymer as its major component, the coat formed therefrom has excellent characteristics which have so far not been attained.

The graft copolymer of this invention preferably comprises the following constituent units (a) and (b): 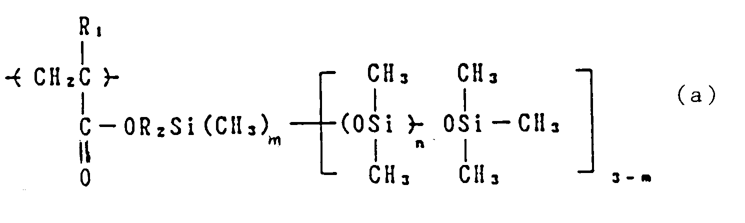
wherein R¹ represents a hydrogen atom or a methyl group; R² represents a divalent hydrocarbon residue containg 1 to 11 carbon atoms, whose carbon chain may be interrupted by an oxygen atom; m represents 0, 1 or 2; and n represents the average degree of polymerization, and is from 0 to 200; and 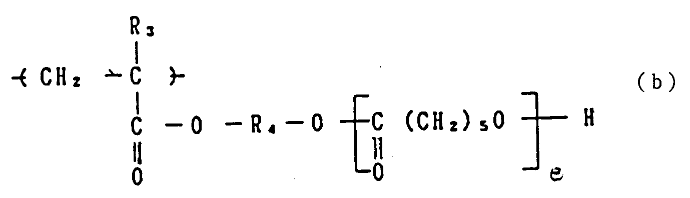
wherein R³ represents a hydrogen atom or a methyl group; R⁴ represents a divalent hydrocarbon residue containing 2 to 4 carbon atoms; e represents the average degree of polymerization, and is from 3 to 20.

The graft copolymer of this invention can advantageously be produced using two methods described below:

### Synthesis Method (1).

This method consists of copolymerization of a radical polymerizable group-containing dimethylpolvsiloxane compound, a radical polymerizable group-containing polycaprolactone compound and radical polymerizable group-containing monomer(s). Wherein, the compounds represented by the following general formula (A) are preferred as the radical polymerizable group-containing dimethylpolysiloxane compound. 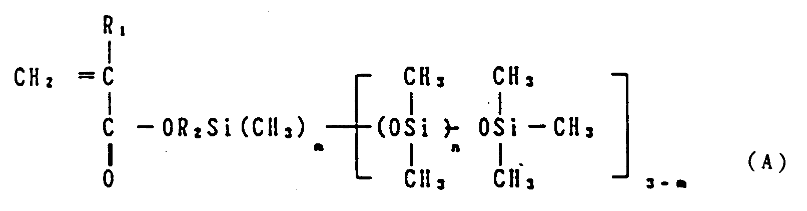
wherein R¹, R², m and n have the same meanings as in the foregoing constituent unit (a).

The compounds represented by the above-illustrated general formula (A) can be prepared from (meth-)acrylate-substituted chlorosilane compounds represented by the following general formula (B) and terminal hydroxyl group-substituted dimethylpolysiloxanes represented by the following general formula (C) by subjecting them to dehydrochlorination in a conventional manner: 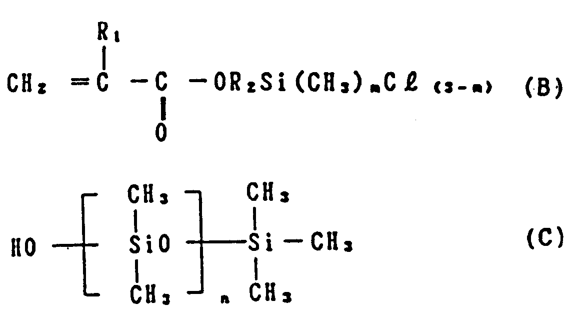
Wherein R¹, R², m and n have the same meanings as in the foregoing general formula (A).

Specific examples of the compounds of the foregoing formula (A) are illustrated below.

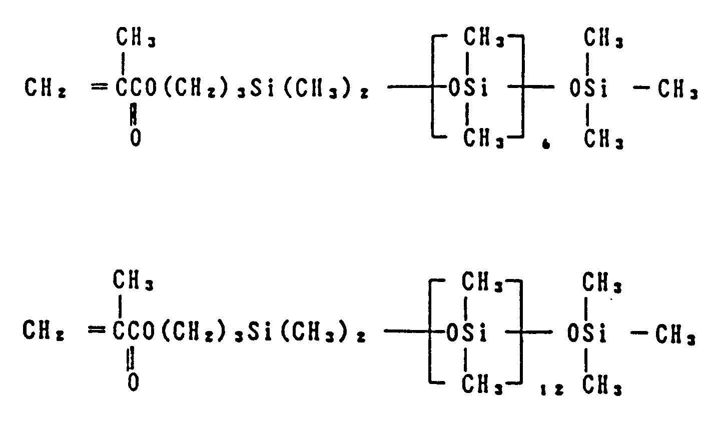

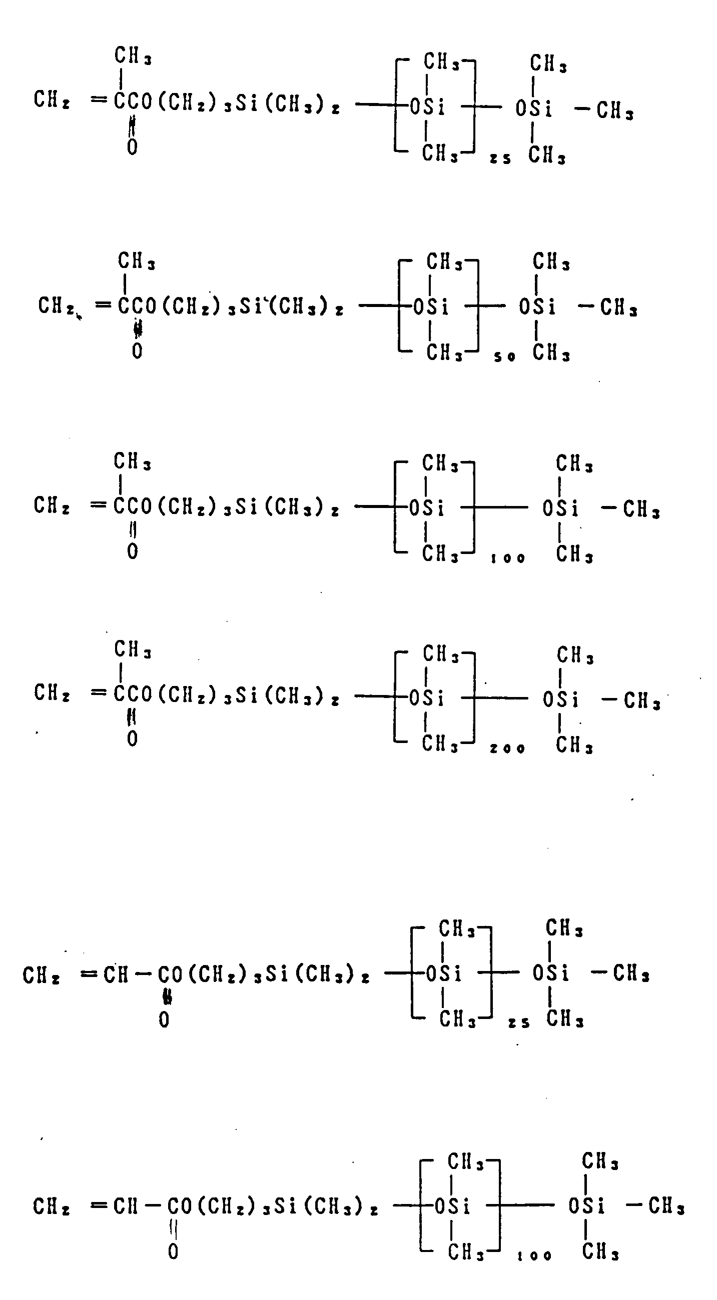

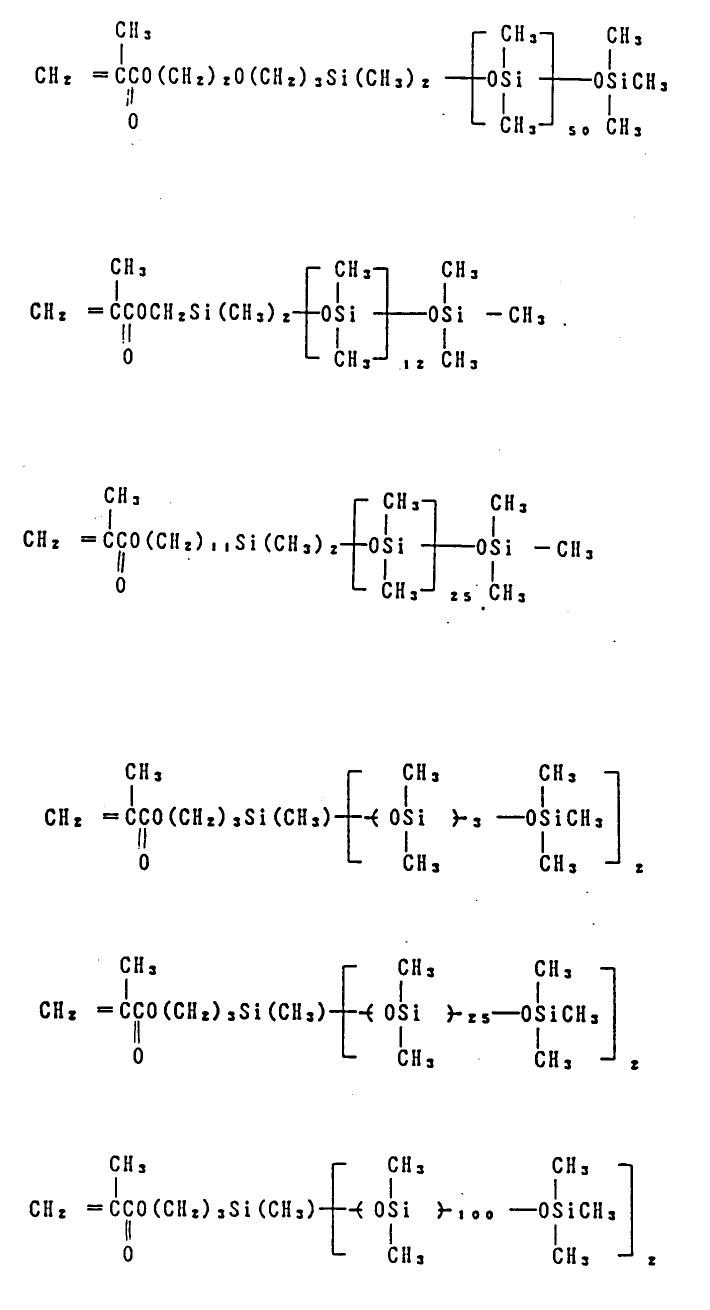

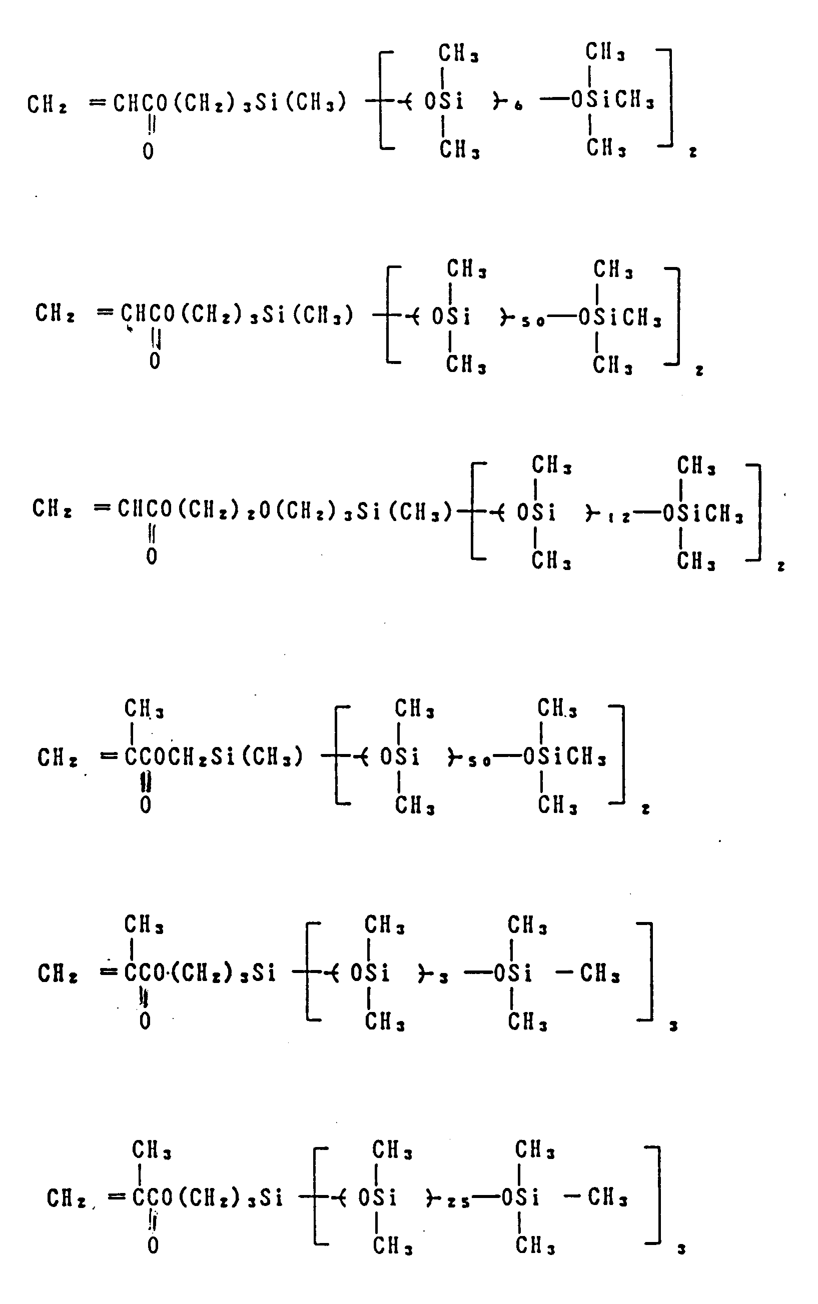

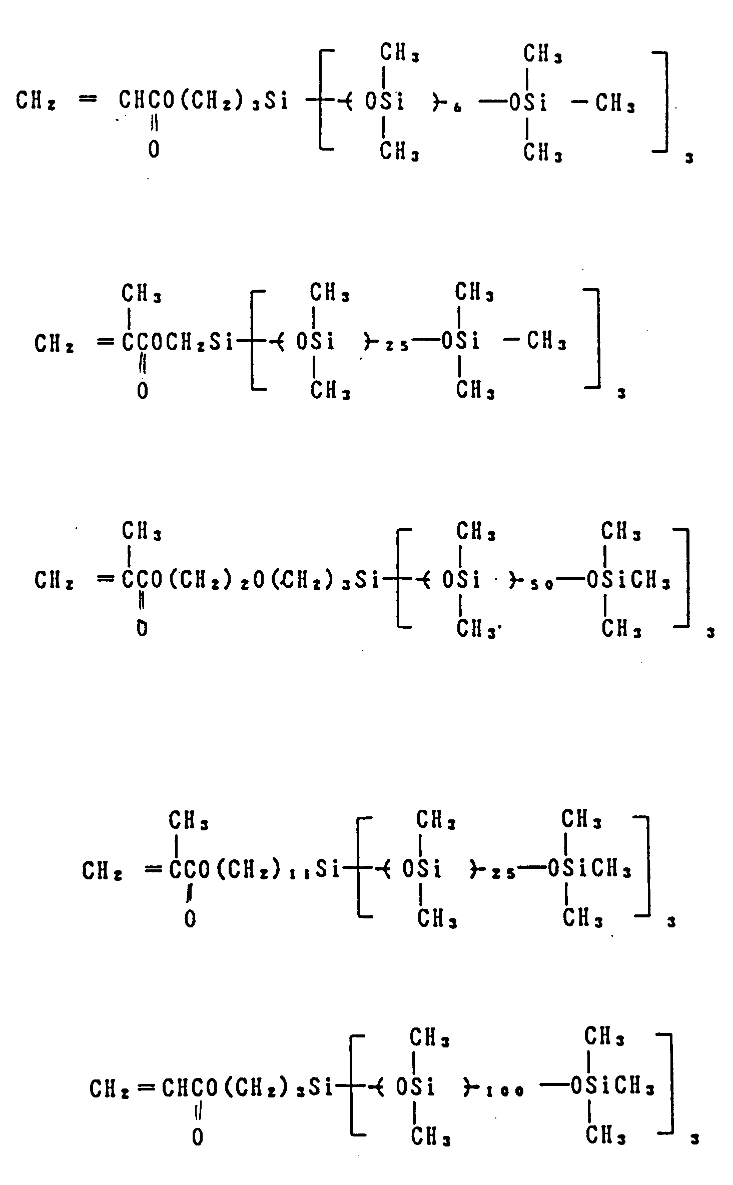

On the other hand, compounds represented by the following general formula (D) are preferred as the radical polymerizable group-containing polycaprolactone compound: 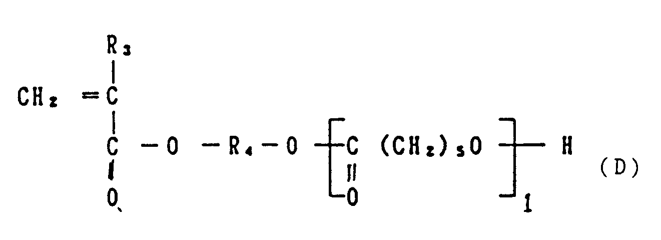
wherein R³, R⁴ and 1 have the same meanings as in the foregoing constitutional unit (B).

The compounds represented by the above-illustrated general formula (D) can be obtained, e.g. by subjecting ε-caprolactone having the following structural formula (E) 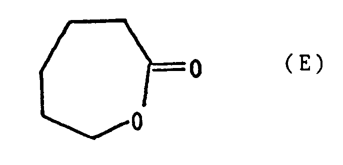
to ring-opening polymerization using hydroxyl group-containing radical polymerizable monomers represented by the following general formula (F) as a polymerization initiator: 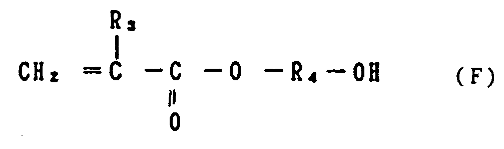
wherein R³ and R⁴ have the same meanings as in the foregoing general formula (D).

Specific examples of the compounds represented by the foregoing general formula (D) are illustrated below. 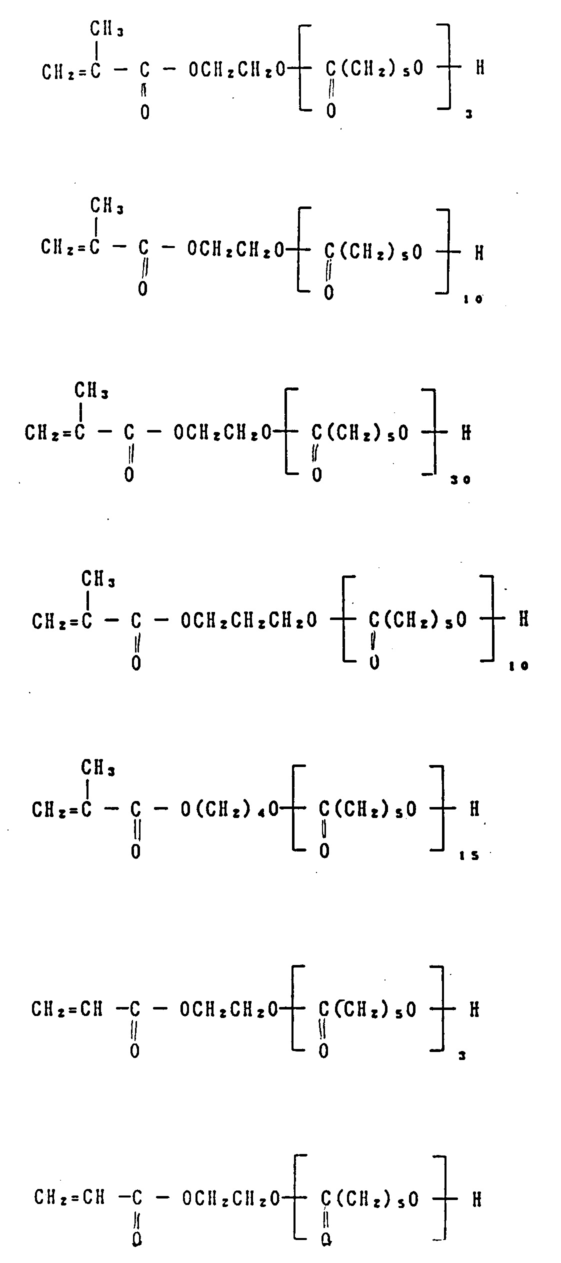 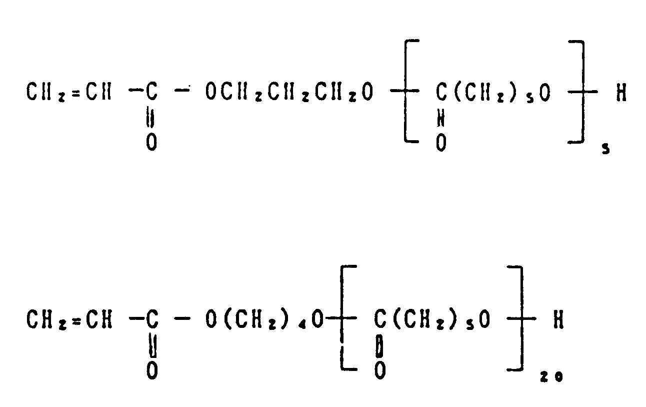
The copolymers of this invention are obtained using a radical polymerizable monomer in addition to the above-described compounds (A) and (D), and subjecting them to copolymerization reaction.

Suitable examples of radical polymerizable monomers which can be copolymerized with the above-described compounds (A) and (D) include (metha)acrylic acid, various derivatives of (meth-)acrylic acid, including alkyl esters such as methyl(meth-)acrylate, butyl(meth) acrylate and 2 ethylhexyl(meth-)acrylate, hydroxyalkyl esters such as hydroxyethyl(meth-)acrylate, hydroxypropyl(meth)acrylate and hydroxybutyl(meth)acrylate, acid amides such as acrylamide, etc., perfluoroesters such as perfluorodecylethyl(meth-)acrylate, perfluorooctylethyl(meth-)acrylate, perfluorohexylethyl(meth-)acrylate and perfluorobutylethyl(meth-) acrylate; styrene or styrene derivatives; fumaric acid, maleic acid and derivatives thereof; radical polymerizable silicon compounds such as vinyltrimethoxysilane and γ-methacryloxypropyltrimethoxysilane; acrylonitrile; vinylpyrrolidone; vinyl acetate; and vinyl alkyl ethers.

These radical polymerizable monomers can be used alone, or as a combination of two or more thereof.

The copolymerization can be effected in the presence of an ordinary radical polymerization initiator, e.g., peroxides such as benzoyl peroxide and dicumyl peroxide, and azocompounds such as azobisisobutyronitrile. Any of a solution polymerization method, an emulsion polymerization method, a suspension polymerization method and a block polymerization method may be utilized.

Among these polymerization methods, a solution polymerization method is favored in particular, because it facilitates the adjustment of the molecular weight of the copolymer to be obtained to the optimal range. Suitable solvents for the solution polymerization include aromatic hydrocarbons such as benzene, toluene and xylene; ketones such as methyl ethyl ketone and methyl isobutyl ketone and esters such as ethyl acetate and isobutyl acetate. Such solvents may be used alone, or as a mixture of two or more thereof.

In addition, the copolymerization reaction is preferably carried out at a temperature of from 50°C to 180°C, particularly from 60°C to 120°C. At these temperatures, the reaction can be completed in 5 to 10 hours. Synthesis Method (2):

The second synthesis method consists in grafting a polymer obtained by subjecting a lactone,e.g. ε-caprolactone, to ring-opening polymerization onto a copolymer obtained by copolymerizing a radical polymerizable group-containing dimethylpolysiloxane compound, a hydroxyl group-containing radical polymerizable monomer and radical polymerizable monomer(s) of the kind which can undergo copolymerization with the former two constituent monomers. The radical polymerizable group-containing dimethylpolysiloxane compound and the hydroxyl group-containing radical polymerizable monomer used herein are the same as the compounds (A) and (F), respectively, used in the foregoing Synthesis Method (1).

As examples of radical polymerizable monomers which can be copolymerized with the compounds (A) and (F) and used in the above-described copolymerization, mention may be made of various derivatives of (meth-)acrylic acid etc., as previously exemplified.

Usable methods of copolymerization include those described with respect to Synthesis Method (1).

The ring-opening graft copolymerization between a lactone, such as ε-caprolactone, and the silicone type graft copolymers obtained in the foregoing copolymerization can be effected in an atmosphere of nitrogen at a temperature of from 100°C to 200°C using an organometallic compound or organometallic oxide as a catalyst. An appropriate reaction time therein is from 2 to 10 hours. As examples of solvents preferably used therein, mention may be made of aromatic hydrocarbons such as toluene and xylene; aliphatic hydrocarbons such as n-octane and n-decane; and ketones such as methyl isobutyl ketone and cyclohexanone.

Examples of the above-described organometallic compounds include dibutyltin dioctoate, dibutyltin dilaurate, tetrapropyl titanate and tetrabutyl titanate.

By utilizing either of the foregoing Synthesis Methods (1) and (2), a graft copolymer comprising the constitutent units of the foregoing formulae (a) and (b) can be obtained directly.

Although suitable fractions of the constitutent units (a) and (b) in the graft copolymer of this invention cannot be given definitely because they depend on the particular kinds of units employed and those of the other radical polymerizable monomers, it can be generally said that a suitable proportion of the constituent unit (a) is from 5 to 80 wt%, preferably 10 to 60 wt%, and that of the constituent unit (b) from 2 to 50 wt%, preferably from 5 to 30 wt%.

If the constituent unit (a) is contained in an amount of less than 5 wt%, the water repellency, stain resistance mold releasability and lubricity of the formed coat are insufficient, whereas if its amount is increased beyond 80 wt% the film forming ability is lowered. On the other hand, when the constituent unit (b) is contained in an amount of less than 2 wt% the flexibility of the formed coat is insufficient, whereas when its amount is increased beyond 50 wt% the hardness and the appearance of the formed coat are unsatisfactory.

Next, coating compositions containing as a main component the graft copolymer of this invention will be described in detail.

In addition to the above-described graft copolymers, it is possible for the coating composition of this invention to contain an arbitrary combination of various additives including solvents, cross-linking agents, other resins, fillers and so on.

Solvents are used for the purposes of viscosity adjustment of the composition thickness adjustment of the coat, and so on. Their choice is not particularly restricted as far as they are compatible with the graft copolymers of this invention. Examples of solvents which can be used for the above-described purposes include aromatic hydrocarbons such as benzene, toluene and xylene, aliphatic hydrocarbons such as n-hexane, n-octane and n-decane; chlorinated compounds such as methylene chloride, chloroform and carbon tetrachloride; ketones such as methyl ethyl ketone, methyl isobutyl ketone and cyclohexanone; esters such as ethyl acetate and butyl acetate; dioxane; and dimethylformamide. These solvents can be used alone or as a mixture of two or more thereof.

The graft copolymers of this invention can be converted into an ardinary-temperature drying type coating material of high quality simply by dissolving them in the above-cited solvents. Also, it is feasible to convert the above-cited coating materials to ordinary-temperature ceurable coating materials which can provide a coat excellent in solvent resistance by further compounding with a polyfunctional isocyanate compound as a cross-linklng agent.

Polyfunctional isocyanate compounds used as crosslinking agents in the foregoing case have no particular limitation, provided that they have two or more of functional groups. Specific examples thereof include diisocyanates such as tolylenediisocyanate (TDI), diphenylmethanediisocyanate (MDI), tolidine-diisocyanate (TODI)., naphthalenediisocyanate (NDI), hexamethylene-, diisocyanate (HDI), isophorone-diisocyanate (IPDI) and xylylenediisocyanate (XDI) and polyisocyanates such as trimetbylolpropane (TMP), modified TDI, isocyanurate combined TDI, TMP modified HDI, isocyanurate combined HDI, biuret combined HDI, TMP modified IPDI and isocyanurate combined IPDI.

Such isocyanate compounds as cited above are preferably compounded in a proportion of 0.5 to 2.0 equivalents, particularly 0.8 to 1.5 equivalents, to one equivalent of hydroxyl group in the graft copolymer of this invention. In this case also, it is possible to accelerate the curing of the coat by addition of a trace amount of organotin compound, e.g., dibutyltin dioctoate or dibutyltin dilaurate as cross-linkage accelerator.

The coating composition of this invention, although containing the graft copolymer of this invention as its major component, may be compounded with other organic resins, e.g., acrylic resins, polyester resins, epoxy resins or alkyd resins if desired.

In addition, an inorganic filler such as silica, alumina, glass powder, clay, talc, calcium carbonate, mica powder, titanium dioxide, wollastonite or magnesium oxide may be added for the purpose of improving the strength of the coat. Further, other additives, e.g., an antioxidant, an ageing inhibitor, an antistatic agent or a coloring agent may be incorporated.

When the graft copolymer of this invention is incorporated as major component with a coating composition, the organopolysiloxane branch component is concentrated at the coat surface to provide its particular characteristics, namely weather resistance, water repellency, stain resistance, mold releasability and lubricity, and the polylactone branch component remains inside the coat to enhance its flexibility. Consequently, the formed coat acquires excellent characteristics which has so far not been realized.

### EXAMPLES

This invention will now be illustrated in more detail by reference to the following Examples. However, the invention should not be construed as being limited to these Examples.

Additionally, the term "hydroxyl equivalent" used in the following Examples describes the numerical value calculated from the hydroxyl value of JIS (Japan Industrial Standard) K0070 described below.

Determination of Hydoxyl Value (JIS K0070):
An acetylating agent consisting of acetic anhydride and pyridine was added to a sample, and then heated to acetylate the hydroxyl groups in the sample. Thereafter, excess acetic anhydride was decomposed to acetic acid by addition of water, and the resulting acetic acid was subjected to neutralization titration with a 0.5 N ethanol solution of potassium hydroxide. 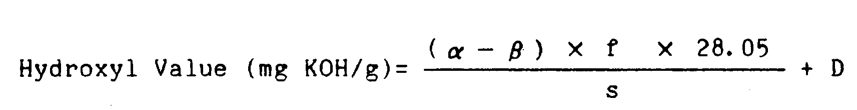
α : a volome(ml) of 0.5 N ethanol solution of potassium hydroxide used in a blank test.
β : a volume (ml) of 0.5 N ethanol solution of potassium hydroxide used in this test.
f : a factor of the 0.5 N potassium hydroxide used.
S : the sample examined (g).
D : acid value.

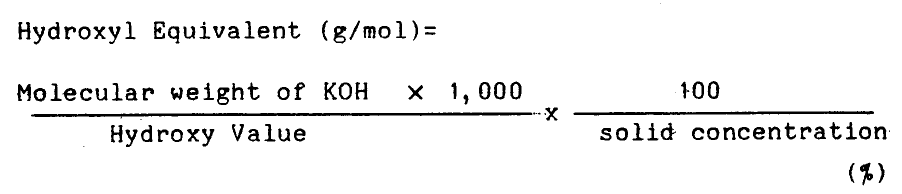

### EXAMPLE 1

35 parts by weight (abbreviated as pts. wt.) of the compound represented by the following chemical formula (A-1) (as the radical copolymerizable group-containing dimethylpolysiloxane compound of the foregoing general formula (A)), 5 pts. wt. of the compound represented by the following chemical formula (D-1) (as the radical polymerizable group-containing polycaprolactone compound of the foregoing general formula (D)), 50 pts.wt. of methylmethacrylate, 10 pts.wt. of hydroxylethylmethacrylate, 150 pts.wt. of toluene and 2 pts. wt. of azobisisobutyronitrile were placed in a glass reactor, and heated at a temperature of 90-95 °C for 5 hours with stirring in a stream of nitrogen gas to effect the copolymerization reaction. Thus; a viscous solution having a solids concentration of 40 wt% was obtained. 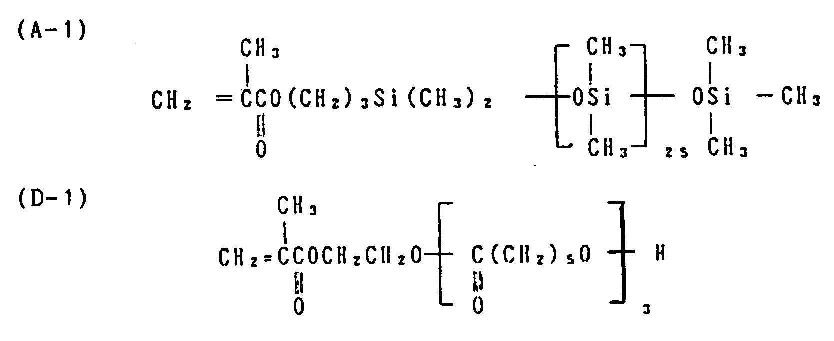
The hydroxyl equivalent of this solution on a solids basis was 1.150 (g/mol).

The produced copolymer was precipitated from this solution by adding excess methyl alcohol, followed by washing. These procedures were repeated three times. Then, it was subjected to vacuum drying at 100 °C under a pressure of 10 mmHg. Thus, the intended copolymer was obtained as a white solid. This copolymer was identified as a dimethylpolysiloxane- and polycaprolactone-grafted copolymer from the results of IR spectrum analysis (See the accompanying drawings) and ′H-NMR spectrum analysis.

In addition a weight average molecular weight of this copolymer determined by GPC was about 28,000, converted to a polystyrene basis.

### EXAMPLES 2 TO 8 AND COMPARATIVE EXAMPLES 1 TO 2

Graft copolymers were produced in the same manner as in Example 1, except that the ingredients used in Example 1, that is, the radical polymerizable group-containing dimethylpolysiloxane compound, the radical polymerizable group-containing polycaprolactone compound, the radical polymerizable monomers and the solvent, were changed in kind and amount from those used in Example 1 to those shown in Table 1. The hydroxyl equivalent and the weight average molecular weight of the solids component at the conclusion of the reaction were determined by the same method as used in Example 1. These data are also set forth in Table 1. Additionally, R¹, R², m and n in Table 1 are the symbols used in the foregoing general formula (A), and R³, R⁴ and P are the symbols used in the foregoing general formula (D). Moreover, MMA, BMA, 2HEA, HEMA and PHMA represent methyl methacrylate, butyl methacrylate, 2-ethylhexyl acrylate, hydroxyethyl methacrylate and perfluorooctylethyl methacrylate, respectively.

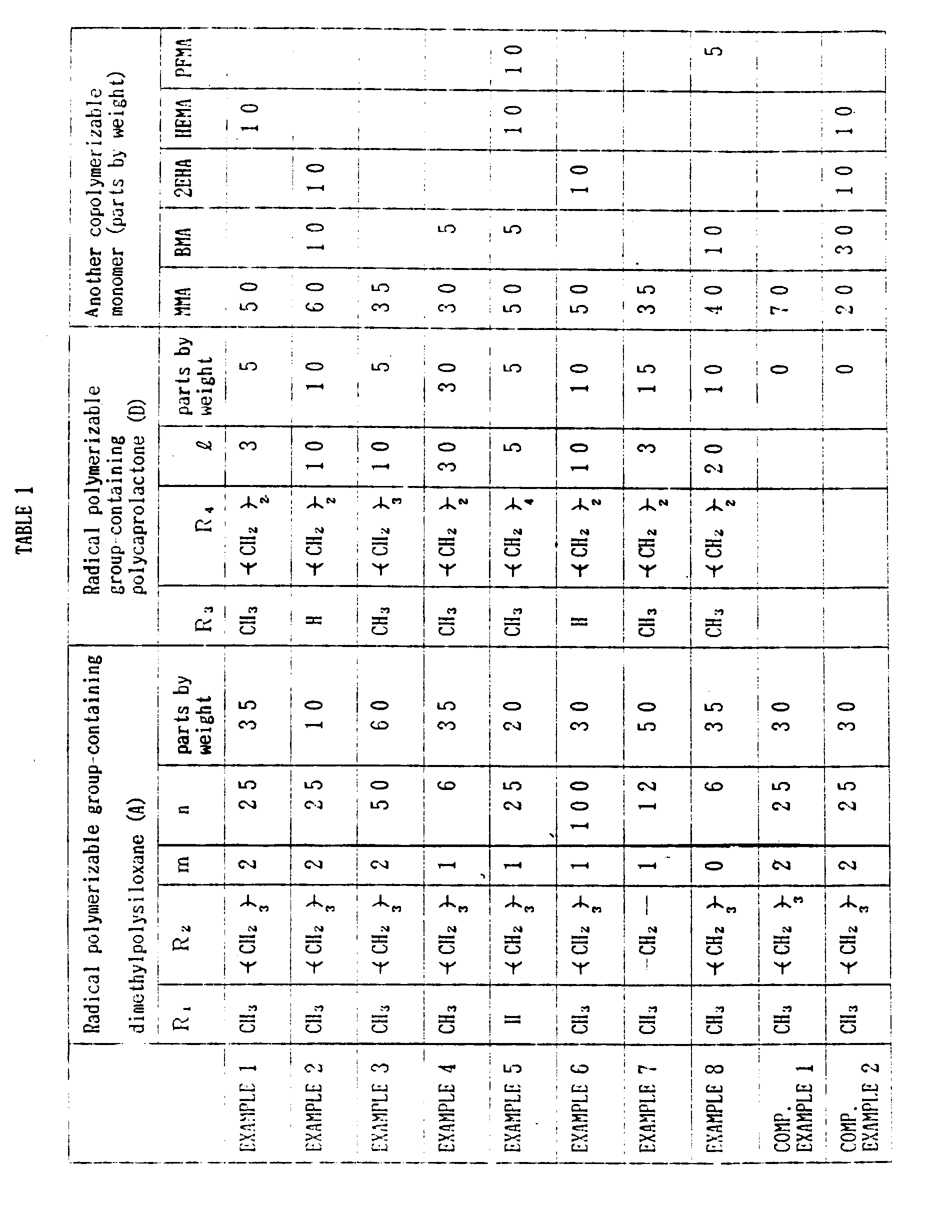

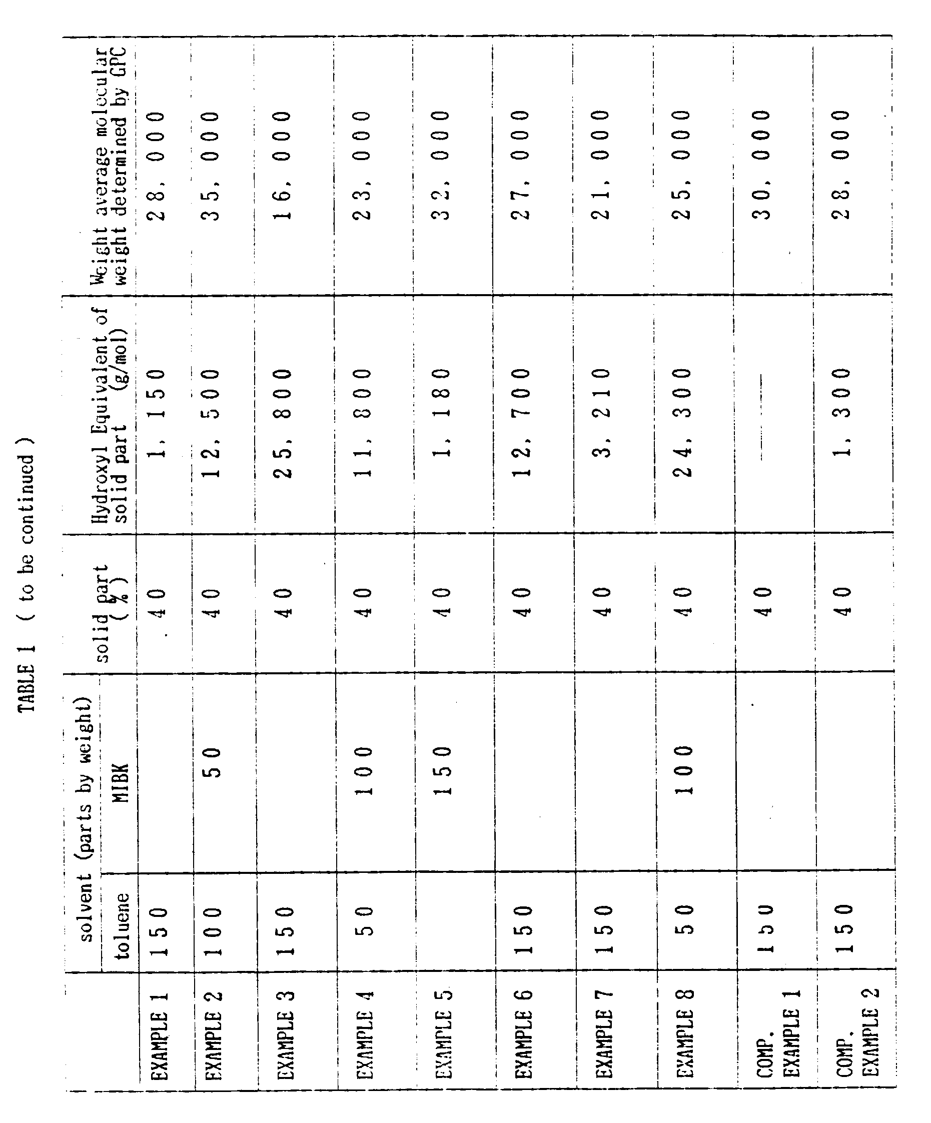

### EXAMPLE 9

A copolymerization reaction was carried out under the same condition as in Example 1 using 30 pts. wt. of the same radical polymerizable group-containing dimethylpolysiloxane compound as in Example 1, 1 pt.wt. of hydroxyethyl methacrylate, 50 pts.wt. of methyl methacrylate, 10 pts.wt. of butyl methacrylate, 150 pts. wt. of xylene and 2 pts. wt. of azobisisobutyronitrile, and thereby was obtained a viscous solution containing a solid component in a concentration of 38 wt %.

To the thus obtained graft copolymer solution, 9 pts. wt. of ε-caprolactone and 0.025 pt. wt. of tetrabutyl titanate were added, and heated to a temperature of 140-145 °C for 5 hours in a stream of nitrogen gas to effect the reaction.

Thus, a viscous solution having a solids concentration of 40 wt % was obtained. A hydroxyl equivalent of this solution was 13,000 (g/mol) on a solids basis. A white solid copolymer was taken out of this solution by performing the same operations as in Example 1, and identified as a dimethylpolystloxane- and polycaprolactone-grafted copolymer from the IR absorption spectrum analysis and the ¹H-NMR spectrum analysis.

In addition, a weight average molecular weight of the obtained copolymer determined by GPC was about 31,000, converted to a polystyrene basis.

### EXMAPLES 10 TO 13

Graft copolymers were produced in the same manner as in Example 9, except that the radical polymerizable group-containing dimethylpolysiloxane compound, the hydroxyl group-containing radical polymerizable monomer, other copolymerizable monomers and solvents were changed in kind and amount from those in Example 9 to those shown in Table 2, respectively, and the amount of ε-caprolactone was changed to those shown in Table 1. Data concerning hydroxyl equivalents of the obtained solutions on a solids basis, and weight average molecular weight of the produced copolymers are shown in Table 2 together with those obtained in Example 9. Additionally, HEA in Table 2 refers to hydroxylethyl acrylate, and other symbols have the same meanings as in Table 1, respectively.

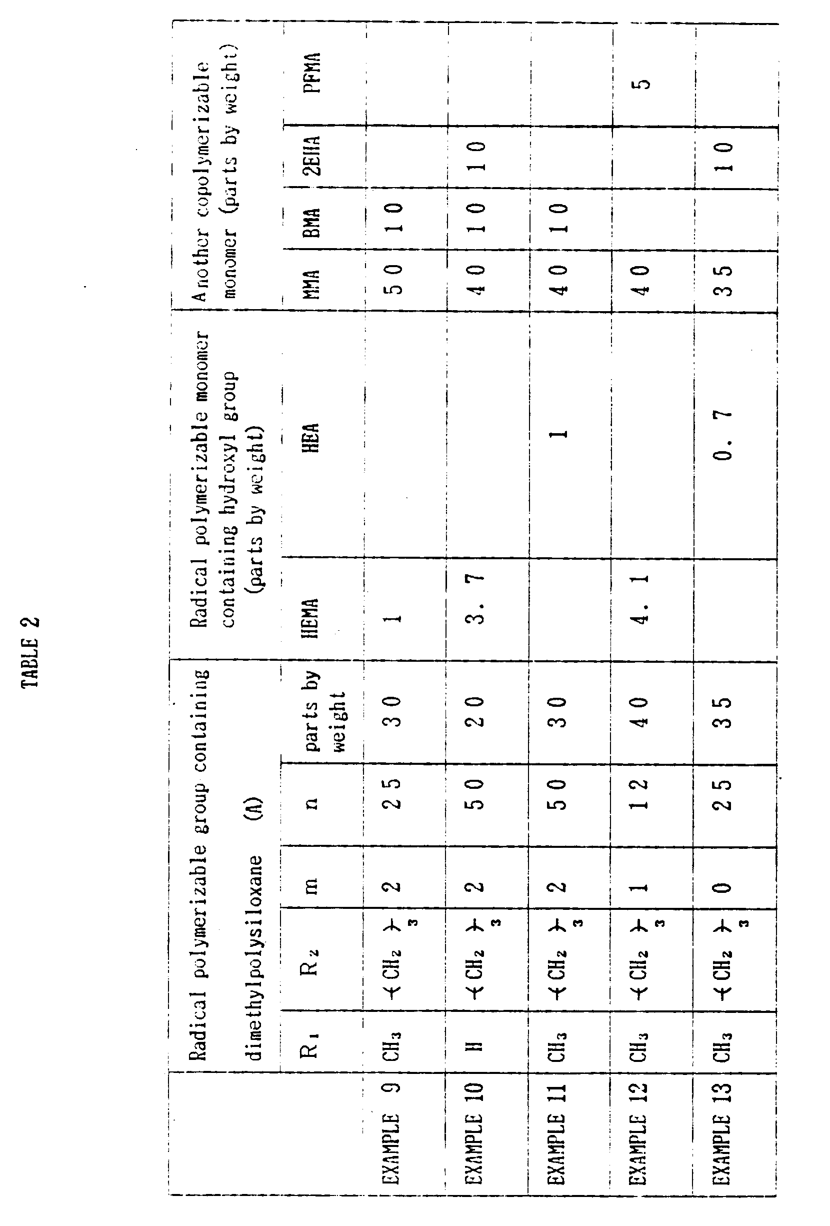

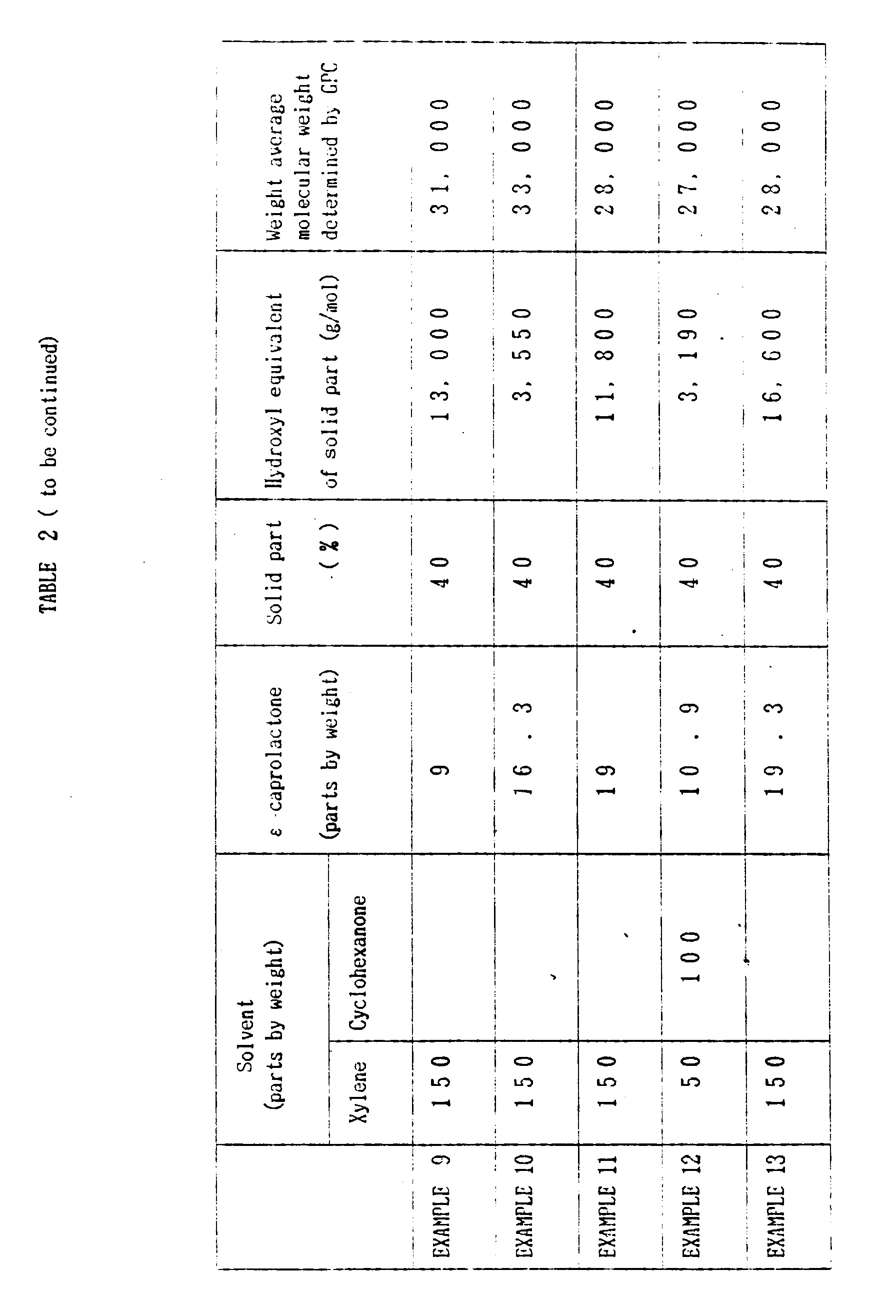

### EXAMPLE 14

The graft copolymer solution obtained in Example 1 was diluted with a methyl ethyl ketone-ethyl acetate (1/1 by weight) mixture so that the resulting solids concentration became 20%, coated on an Al plate using a spinner, and air-dried for 24 hours at room temperature to form a transparent coat having a thickness of 20 µm. The thus formed coat was examined for appearance, contact angle of water, kinetic friction coefficient, adhesion, weather resistance, flexibility and solvent resistance. The results obtained are shown in Table 3.
Appearance: whether the coat was sticky or not to the touch was observed. A sticky coat is indicated by a cross, while a non-sticky coat is indicated by a circle.
Contact angle of water was measured with a CA-A contact Angle Meter CA-A made by Kyowa Kagaku.
The kinetic friction coefficient was measured with a kinetic friction coefficient meter (made by Kyowa Kagaku) under the following conditions:
rubbing element, SUS Ball; load, 50 g; rubbing speed, 20 cm/min.
Adhesion: the coat was cut crosswise at intervals of 1 mm to make 100 square pieces. An adhesive tape was applied next to a load was imposed thereon; the tape was then peeled away therefrom. The number of the remaining squares was then counted.
Weather resistance: The luster rentention rate after 1,00 hours' exposure in a sunshine weather meter was measured.

A circle indicates that the coat had a luster retention rate of 90% or above, while a cross indicates that the coat had a luster rentention rate less than 90%.
Flexibility: bending test was carried out using a mandrel 3 mm in diameter under the condition of 20°C - 65% RH. A circle indicates that neither cleavage nor peeling was caused, while a cross indicates that there were some cleavages and peelings.
Solvent resistance: the coat was soaked in toluene.
After 1-hour lapse, it was taken out of the toluene and its appearance was observed.

A circle indicates that no change was observed, while a cross indicates that dissolution occurred.

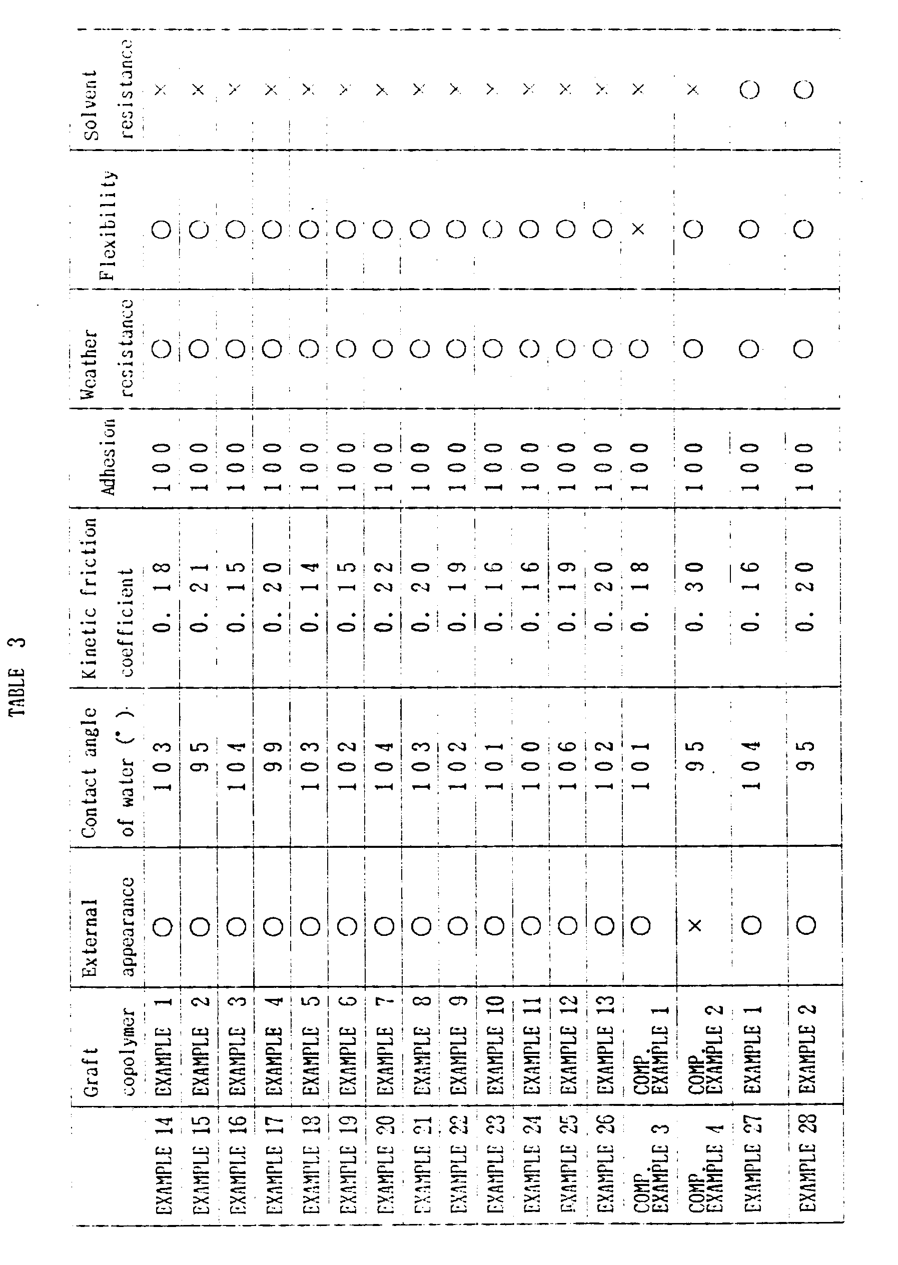

### EXAMPLES 15 TO 26

The same operations as in Example 14 were performed, except that each of the graft copolymer solutions obtained in Examples 2 to 13 were used in the place of the graft copolymer solution obtained in Example 1, and the properties of each coat formed were evaluated in the same ways as adopted in Example 14. The revolts obtained are shown in Table 3.

### COMPARATIVE EXAMPLES 3 AND 4

Each of the formed coats was examined for properties by performing the same operations as in Example 14, except that each of the graft copolymer solutions obtained in Comparative Examples 1 and 2 were used in the place of the graft copolymer solution obtained in Example 1. The results shown in Table 3 were obtained.

### EXAMPLE 27

The graft copolymer solution obtained in Example 1 was diluted with amethyl ethyl ketone-ethyl acetate (1/1 by weight) mixture so that the resulting solids concentration became 20%. A 100 pts. wt. portion of this diluted solution was further mixed with 4.1 pts. wt. of isocyanurate combined HDI and 0.05 pt. wt. of dibutyltin dioctate, coated on an Al plate using a spinner, and air-dried for 3 days at room temperature to form a transparent coat having a thickness of 20 µm. The thus formed coat was examined for properties in the same ways as in Example 14, and the results shown in Table 3 were obtained.

### EXAMPLE 28

A coat was formed in the-same manner as in Example 14, except that the graft copolymer solution prepared in Example 2 was used instead of the graft copolymer solution prepared in Example 1 and the content of isocyanurate combined HDI was changed to 0.4 pt.wt. The thus formed coat was examined for properties, and the results shown in Table 3 were obtained.

The data set forth in Table 3 have demonstrated that the covering compositions containing the graft copolymers of this invention as their major component are excellent in water repellency, lubricity, weather resistance, and flexibility.

Moreover, it has been substantiated that compounding with a cross-linking agent can impart excellent solvent-resistance to the coats formed utilising the graft copolymer of this invention.

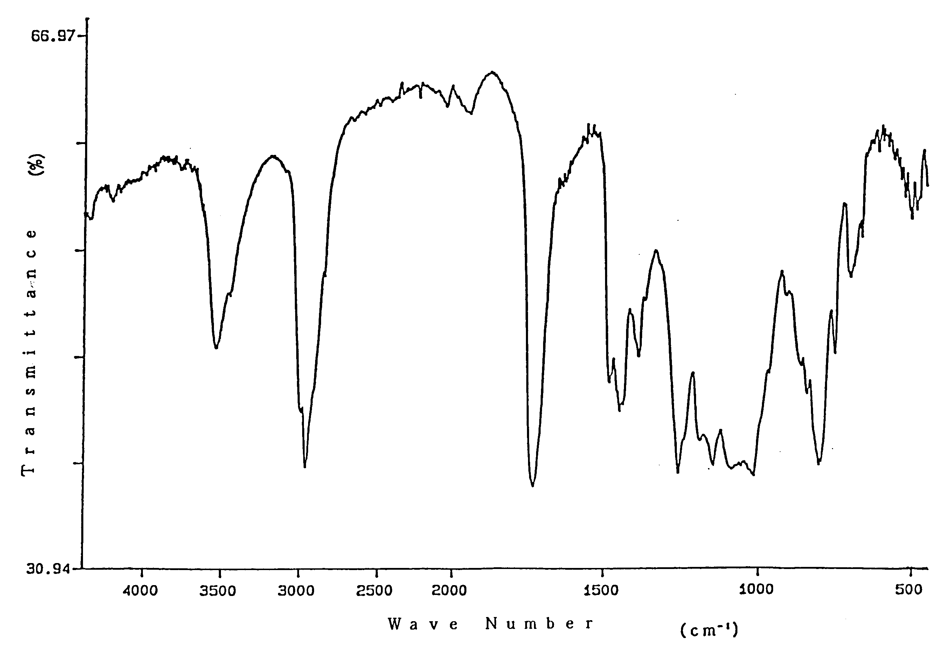

## Claims

1. A graft copolymer characterized in that it contains a vinyl polymer as a trunk polymer, and both organopolysiloxane and polylactone as branch polymers, wherein the proportion of the organopolysiloxane is from 5 to 80 wt% and the proportion of the polylactone is from 2 to 50 wt%.

2. A graft copolymer as claimed in Claim 1, wherein said trunk polymer contains constituent units derived from at least one monomer selected from (meth-)acrylic acid or derivatives thereof, styrene or derivatives thereof, fumaric acid or derivatives thereof, maleic acid or derivatives thereof, radical polymerizable silicone compounds, acrylonitrile, vinylpyrrolidone, vinylacetate and vinyl alkyl ethers.

3. A graft copolymer as claimed in Claim 2, in which said (meth-)acrylic acid derivatives are alkyl esters, acid amides or fluoroesters of (meth-)acrylic acid.

4. A graft copolymer claimed in Claim 1, 2 or 3, in which constituent units of said branch polymers are represented by the following general formulae (a) and (b), respectively: 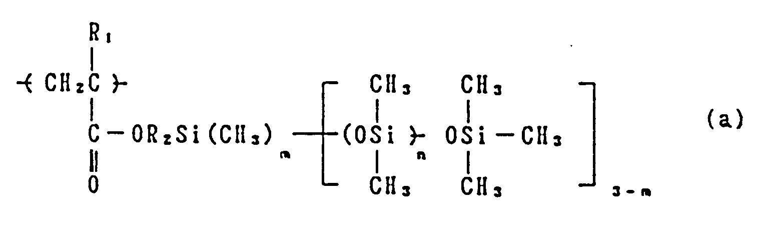 wherein R¹ represents a hydrogen atom or a methyl group; R² represents a divalent hydrocarbon residue containing 1 to 11 carbon atoms, whose carbon chain may be interrupted by an oxygen atom; m represents 0, 1 or 2, and n represents the average degree of polymerization and is from 0 to 200; 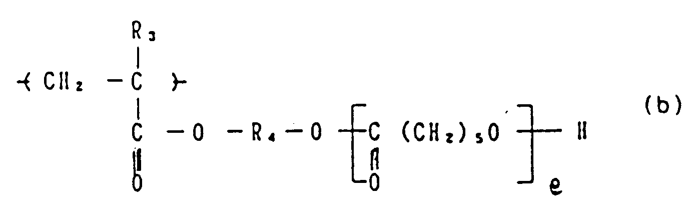 wherein R³ represents a hydrogen atom or a methyl group; R⁴ represents a divalent hydrocarbon residue containing 2 to 4 carbon atoms and e represents the average degree of polymerization and is from 3 to 20.

5. A graft copolymer as claimed in any preceding claim in which the proportion of said constituent unit (a) is from 10 to 60 wt%, and that of said constituent unit (b) is from 5 to 30 wt%.

6. A method of producing a graft copolymer as claimed in Claim 1, comprising subjecting a radical polymerizable group-containing dimethylpolysiloxane compound, a radical polymerizable group-containing polycaprolactone compound and radical polymerizable monomer(s) capable of copolymerizing with said compounds to a copolymerization reaction.

7. A method as claimed in Claim 6, wherein said radical polymerizable group-containing dimethylpolysiloxane compound is represented by the following general formula: 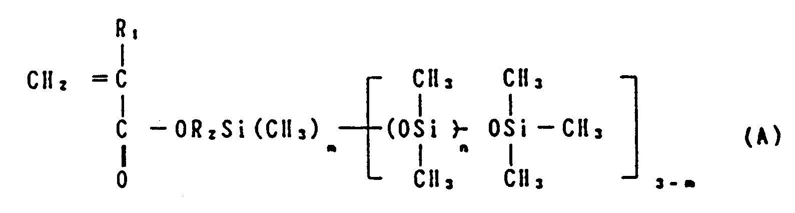 wherein R¹, R², m and n are as defined with respect to the constituent unit (a) in Claim 4; and said radical copolymerizable group-containing polycaprolactone compound is represented by the following general formula: 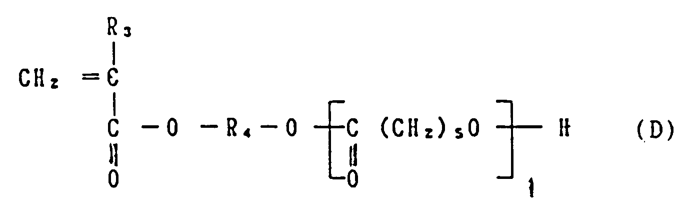 wherein R³, R⁴ and 1 are defined with respect to constituent unit (b) in Claim 4.

8. A method as claimed in Claim 6 or 7, wherein said copolymerization reaction is carried out using a solution polymerization method.

9. A method of producing a graft copolymer as claimed in Claim 1, comprising subjecting a lactone to a ring-opening graft polymerization reaction with a silicone-grafted polymer obtained by copolymerizing a radical polymerizable group-containing dimethylpolysiloxane compound, a hydroxy group-containing radical polymerizable monomer, and radical polymerizable monomers capable of copolymerizing therewith.

10. A method as claimed in Claim 9, wherein said radical polymerizable group-containing dimethylpolysiloxane compound is represented by the general formula (A) as set forth and defined in Claim 7 and said hydroxy group-containing radical polymerizable monomer is represented by the following general formula (F) 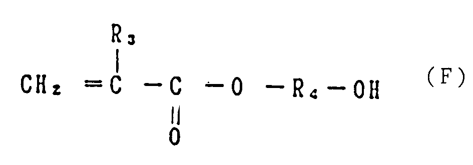 wherein R³ and R⁴ are as defined in Claim 3.

11. A method as claimed in Claim 9 or 10, wherein the ring-opening graft polymerization reaction between said silicone-grafted copolymer and a lactone is carried out using an organometallic oxide as a catalyst in a stream of nitrogen at a temperature of from 100 to 200°C.

12. A method as claimed in any one of Claims 6 to 11, wherein said radical polymerizable copolymerizable monomers include at least one monomer selected from (meth-) acrylic acid or derivatives thereof, styrene or derivatives thereof, fumaric acid or derivatives thereof, maleic acid or derivatives thereof, radical polymerizable silicone compounds, acrylonitrile, vinylpyrrolidone, vinyl acetate and vinyl alkyl ethers.

13. A coating composition which contains as a main component, a graft copolymer as claimed in any one of Claims 1 to 5 or which is produced by a process as claimed in any of Claims 6 to 12.

## Patentansprüche

1. Pfropfcopolymer, dadurch gekennzeichnet, daß es ein Vinylpolymer als Stammpolymer enthält und sowohl Organopolysiloxan und Polylacton als Zweigpolymere, wobei der Anteil von Organopolysiloxan zwischen 5 und 80 Gew.-% und der Anteil von Polylacton zwischen 2 und 50 Gew.-% liegt.

2. Pfropfcopolymer nach Anspruch 1, bei dem das genannte Stammpolymer konstituierende Einheiten enthält, die abgeleitet sind von wenigstens einem Monomer, das ausgewählt wurde aus (Meth-) Acrylsäure oder Derivaten davon, Styren oder Styrenderivaten, Fumarsäure oder Derivaten davon, Maleinsäure oder Derivaten davon, radikale polymerisierbare Silikonverbindungen, Acrylnitril, Vinylpyrrolidon, Vinylacetat und Vinylalkylester.

3. Pfropfcopolymer nach Anspruch 2, bei welchem die genannten (Meth-) Acrylsäurederivate Alkylester, Säureamide oder Fluorester von (Meth-) Acrylsäure sind.

4. Pfropfcopolymer nach Anspruch 1, 2 oder 3, in welchem die Elementareinheiten der genannten Zweigpolymere wiedergegeben werden durch die folgenden allgemeinen Formeln (a) bzw. (b): 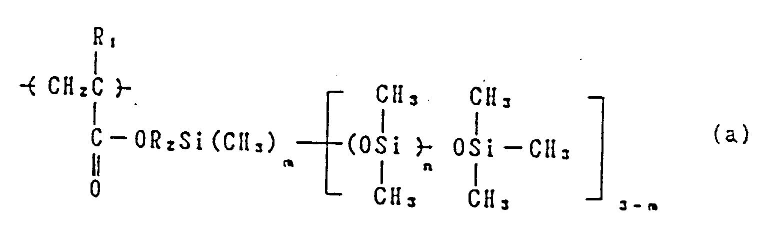 worin R¹ ein Wasserstoffatom oder eine Methylgruppe repräsentiert, R² einen divalenten Hydrocarbonrest mit 1 bis 11 Kohlenstoffatomen, dessen Kohlenstoffkette durch ein Sauerstoffatom unterbrochen sein kann, m die Zahlen 0, 1, oder 2 bedeutet, und n den Durchschnittsgrad der Polymerisation wiedergibt und zwischen 0 und 200 liegt; 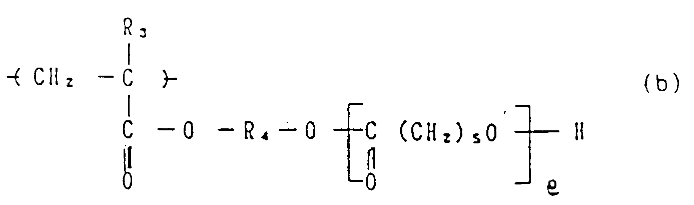 worin R³ ein Wasserstoffatom oder eine Methylgruppe bedeutet; R⁴ ein divalenter Hydrocarbonrest mit 2 bis 4 Kohlenstoffatomen ist und e den Durchschnittsgrad der Polymerisation wiedergibt und zwischen 3 und 20 liegt.

5. Pfropfcopolyzner nach einem der vorhergehenden Ansprüche, bei welchem der Anteil der Elementareinheit (a) zwischen 10 und 60 Gew.% und der der Elementareinheit (b) zwischen 5 und 30 Gew.% liegt.

6. Verfahren zur Herstellung eines Pfropfcopolymers nach Anspruch 1, dadurch gekennzeichnet, daß eine radikale polymerisierbare Gruppen enthaltende Dimethylpolysiloxanverbindung, eine radikal polymerisierbare Gruppen enthaltende Polycaprolactonverbindung und wenigstens ein radikal polymerisierbares Monomer, das in der Lage ist, mit diesen Verbindungen zu copolymerisieren, einer Copolymerisierreaktion unterworfen wird.

7. Verfahren nach Anspruch 6, wobei die radikal polymerisierbare Gruppen enthaltende Dimethylpolysiloxanverbindung wiedergegeben ist durch die folgende allgemeine Formel: 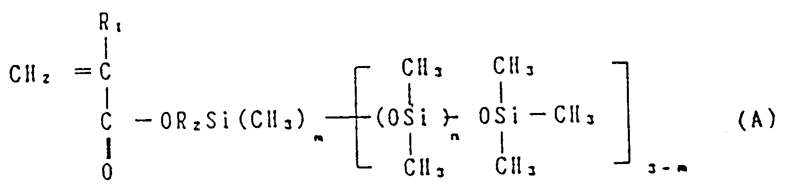 wobei R¹, R², m und n die gleiche Bedeutung haben wie bei der Elementareinheit (a) in Anspruch 4, und die radikal copolymerisierbare Gruppen enthaltende Polycaprolactonverbindung wiedergegeben ist durch die folgende allgemeine Formel: 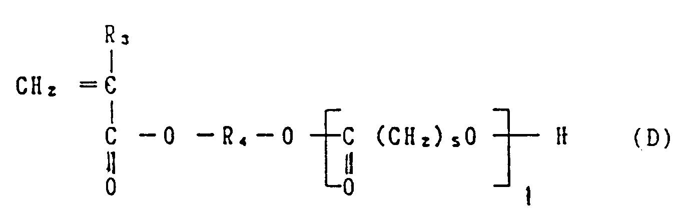 wobei R³, R⁴ und 1 entsprechend der Elementareinheit (b) in Anspruch 4 definiert sind.

8. Verfahren nach Anspruch 6 oder 7, bei dem die Copolymerisationsreaktion durch Verwendung eines Lösungspolymerisationsverfahrens ausgeführt wird.

9. Verfahren zur Herstellung eines Pfropfcopolymers nach Anspruch 1, dadurch gekennzeichnet, daß ein Lacton einer ringöffnenden Pfropfpolymerisationsreaktion mit einem silikon-gepfropften Polymer unterworfen wird, welches erhalten wurde durch Copolymerisierung einer radikal polymerisierbare Gruppen enthaltenden Dimethylpolysyloxanverbindung, einem Hydroxigruppen enthaltenden radikal polymerisierbaren Monomer und radikal polymerisierbarern Monomeren, die in der Lage sind, damit zu copolymerisieren.

10. Verfahren nach Anspruch 9, bei dem die radikal polymerisierbare Gruppen enthaltende Dimethylplysiloxanverbindung wiedergegeben ist durch die allgemeine Formel (A), wie sie in Anspruch 7 definiert ist, und das genannte Hydroxigruppen enthaltende radikal polymerisierbare Monomer wiedergegeben ist durch die allgemeine Formel (F) 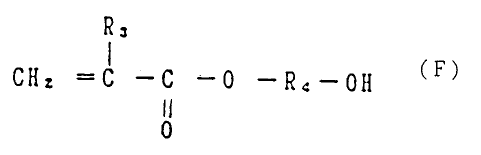 worin R³ und R⁴ das gleiche bedeuten, wie es in Anspruch 3 definiert wurde.

11. Verfahren nach Anspruch 9 oder 10, wobei die ringöffnende Pfropfpolymerisationsreaktion zwischen dem genannten silikon-gepfropften Copolymer und einem Lacton ausgeführt wird unter Benutzung eines organometallischen Oxids als Katalysator in einem Strom von Stickstoff bei einer Temperatur zwischen 100 und 200°C.

12. Verfahren nach einem der Ansprüche 6 bis 11, bei dem die genanten radikal polymerisierbaren copolymerisierbaren Monomere wenigstens ein Monomer umfassen, welches ausgewählt ist aus (Meth-) Acrylsäure oder deren Derivaten, Styren oder deren Derivaten, Fumarsäure oder deren Derivaten, Maleinsäure oder Derivaten davon, radikal polymerisierbaren Silikonverbindungen, Acrylnitril, Vinylpyrrolidon, Vinylacetat und Vinylalkyläther.

13. Beschichtungszusammensetzung, die als Hauptkomponente ein Pfropfcopolymer enthält, wie es in einem der Ansprüche 1 bis 5 beansprucht ist und das durch ein Verfahren nach einem der Ansprüche 6 bis 12 hergestellt ist.

## Revendications

1. Copolymère greffé, caractérisé en ce qu'il contient un polyvinyle comme polymère de tronc, et à la fois un organopolysiloxane et une polylactone comme polymères de ramification, la proportion de l'organopolysiloxane étant comprise entre 5 et 80 % en poids et la proportion de la polylactone étant comprise entre 2 et 50 % en poids.

2. Copolymère greffé selon la revendication 1, dans lequel ledit polymère de tronc contient des motifs constitutifs dérivés d'au moins un monomère choisi dans l'ensemble constitué par l'acide (méth)acrylique ou ses dérivés, le styrène ou ses dérivés, l'acide fumarique ou ses dérivés, l'acide maléique ou ses dérivés, les composés siliconés polymérisables par polymérisation radicalaire, l'acrylonitrile, la vinylpyrrolidone, l'acétate de vinyle et les vinylalkyléthers.

3. Copolymère greffé selon la revendication 2, dans lequel lesdits dérivés de l'acide (méth)acrylique sont des alkylesters, des amides d'acides ou des fluoroesters de l'acide (méth)acryliqrne.

4. Copolymère greffé selon la revendication 1, 2 ou 3, dans lequel les motifs constitutifs desdits polymères de ramification sont représentés respectivement par les formules générales (a) et (b) ci-après : 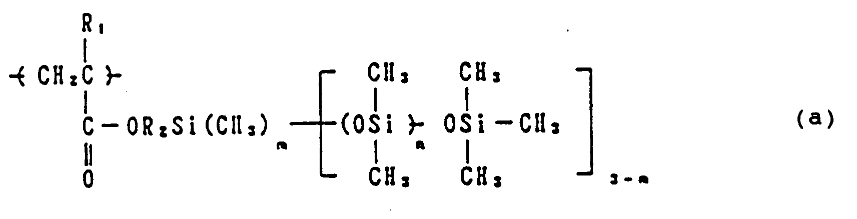 dans laquelle R¹ représente un atome d'hydrogène ou un groupe méthyle ; R² représente un résidu hydrocarboné divalent contenant de 1 à 11 atomes de carbone, dont la chaîne carbonée peut être interrompue par un atome d'oxygène ; m représente 0, 1 ou 2 ; et n représente le degré moyen de polymérisation et vaut de 0 à 200 ; 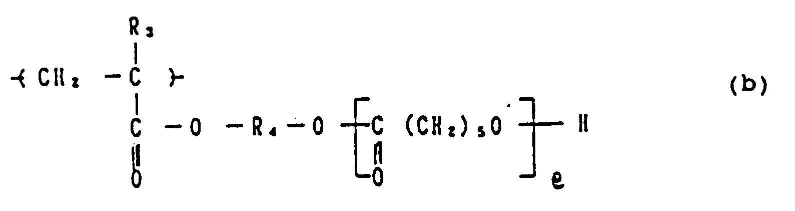 dans laquelle R³ représente un atome d'hydrogène ou un groupe méthyle ; R⁴ représente un résidu hydrocarboné divalent contenant de 2 à 4 atomes de carbone et e représente le degré moyen de polymérisation et vaut de 3 à 20.

5. Copolymère greffé selon l'une quelconque des revendications précédentes, dans lequel la proportion dudit motif constitutif (a) est comprise entre 10 et 60 % en poids, et celle dudit motif constitutif (b) est comprise entre 5 et 30 % en poids.

6. Procédé de production d'un copolymère greffé selon la revendication 1, comprenant l'étape consistant à soumettre à une réaction de copolymérisation un composé diméthylpolysiloxane contenant un groupe polymérisable par polymérisation radicalaire, un composé polycaprolactone contenant un groupe polymérisable par polymérisation radicalaire, et un ou plusieurs monomères contenant un groupe polymérisable par polymérisation radicalaire capables de copolymériser avec lesdits composés.

7. Procédé selon la revendication 6, dans lequel ledit composé diméthylpolysiloxane contenant un groupe polymérisable par polymérisation radicalaire est représenté par la formule générale suivante : 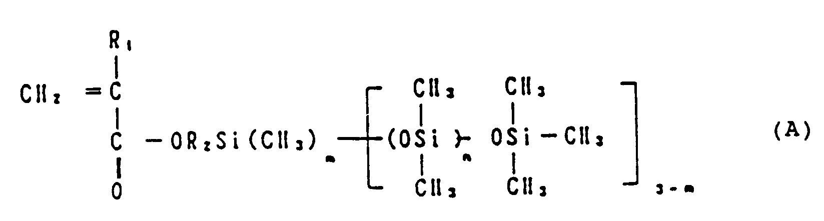 dans laquelle R¹, R² m et n sont tels que définis à propos du motif constitutif (a) dans la revendication 4 ; et ledit composé polycaprolactone contenant un groupe copolymérisable par polymérisation radicalaire est représenté par la formule générale suivante : 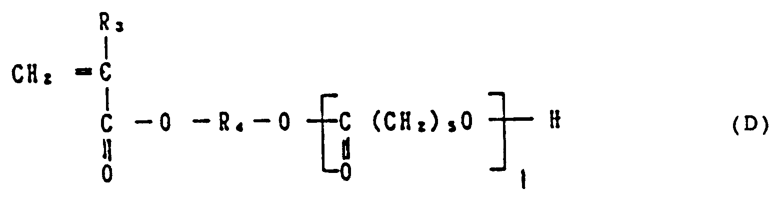 dans laquelle R³, R⁴ et 1 sont tels que définis à propos du motif constitutif (b) dans la revendication 4.

8. Procédé selon la revendication 6 ou 7, dans lequel ladite réaction de copolymérisation est effectuée à l'aide d'un procédé de polymérisation en solution.

9. Procédé de production d'un copolymère greffé selon la revendication 1, comprenant l'étape consistant à soumettre une lactone à une réaction de copolymérisation par greffage décyclisante avec un polymère, greffé par un silicone, obtenu par copolymérisation d'un composé diméthylpolysiloxane contenant un groupe polymérisable par polymérisation radicalaire, d'un monomère polymérisable par polymérisation radicalaire contenant un groupe hydroxy, et de monomères polymérisables par polymérisation radicalaire capables de copolymériser avec ceux-ci.

10. Procédé selon la revendication 9, dans lequel ledit composé diméthylpolysiloxane contenant un groupe polymérisable par polymérisation radicalaire est représenté par la formule générale (A) décrite ci-dessus et définie dans la revendication 7, et ledit monomère polymérisable par polymérisation radicalaire contenant un groupe hydroxy est représenté par la formule générale (F) suivante : 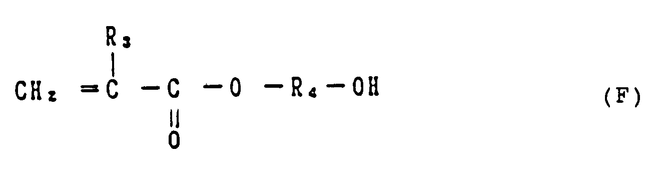 dans laquelle R³ et R⁴ sont tels que définis dans la revendication 3.

11. Procédé selon la revendication 9 ou 10, dans lequel la réaction de polymérisation par greffage décyclisante entre ledit polymère greffé par un silicone et une lactone est mise en oeuvre en utilisant comme catalyseur un oxyde organométallique, sous un courant d'azote et à une température comprise entre 100 et 200°C.

12. Procédé selon l'une quelconque des revendications 6 à 11, dans lequel lesdits monomères copolymérisables par polymérisation radicalaire comprennent au moins un monomère choisi dans l'ensemble constitué par l'acide (méth)acrylique ou ses dérivés, le styrène ou ses dérivés, l'acide fumarique ou ses dérivés, l'acide maléique ou ses dérivés, les composés siliconés polymérisables par polymérisation radicalaire, l'acrylonitrile, la vinylpyrrolidone, l'acétate de vinyle et les vinylalkyléthers.

13. Composition de revêtement qui contient, en tant que composant principal, un copolymère greffé tel que revendiqué dans l'une quelconque des revendications 1 à 5 ou bien qui est produit par un procédé tel que revendiqué dans l'une quelconque des revendications 6 à 12.
